(19) Europäisches Patentamt / European Patent Office / Office européen des brevets

(11) **EP 1 900 834 B1**

(12) **FASCICULE DE BREVET EUROPEEN**

(45) Date de publication et mention
de la délivrance du brevet:
**09.06.2010 Bulletin 2010/23**

(21) Numéro de dépôt: **07291035.9**

(22) Date de dépôt: **23.08.2007**

(51) Int Cl.:
*C22C 19/03* (2006.01)   *C22C 23/06* (2006.01)
*H01M 4/24* (2006.01)   *H01M 4/38* (2006.01)
*H01M 4/46* (2006.01)   *H01M 4/50* (2010.01)
*H01M 10/24* (2006.01)   *H01M 10/34* (2006.01)

(54) **Composition pour électrode négative d'accumulateur à électrolyte alcalin**

Zusammensetzung für negative Elektrode eines Akkumulators mit alkalischem Elektrolyten

Composition for negative electrode of accumulator with alkaline electrolyte

(84) Etats contractants désignés:
**DE FR GB**

(30) Priorité: **15.09.2006 FR 0608093**

(43) Date de publication de la demande:
**19.03.2008 Bulletin 2008/12**

(73) Titulaire: **SAFT GROUPE SA**
**93170 Bagnolet (FR)**

(72) Inventeurs:
• **Bernard, Patrick**
**33000 Bordeaux (FR)**
• **Knosp, Bernard**
**33000 Bordeaux (FR)**
• **Baudry, Michelle**
**33320 Eysines (FR)**

(74) Mandataire: **Hirsch & Associés**
**58, avenue Marceau**
**75008 Paris (FR)**

(56) Documents cités:
**EP-A- 1 727 229    JP-A- 10 106 550**
**JP-A- 2001 316 744    JP-A- 2001 325 957**
**JP-A- 2002 069 554    JP-A- 2005 108 646**
**US-A1- 2004 134 569    US-A1- 2005 100 789**

• **H. KAIYA ET AL.: "Improvement in cycle life performance of high capacity nickel-metal hydride battery" JOURNAL OF ALLOYS AND COMPOUNDS, vol. 231, 15 décembre 1995 (1995-12-15), pages 598-603, XP004077291 ISSN: 0925-8388**

**Description**

DOMAINE TECHNIQUE

L'invention concerne une composition comprenant un alliage de type $AB_t$ avec $3,0 \leq t \leq 4,3$. L'invention concerne aussi une anode (électrode négative) comprenant ladite composition, et un accumulateur à électrolyte alcalin comprenant ladite anode.

ETAT DE LA TECHNIQUE

Les applications électriques et électroniques portables, telles que par exemple les outils sans fil, ont un besoin énergétique croissant. Un accumulateur alcalin comprenant une anode à base d'un métal hydrurable de type $AB_5$ et une cathode à base d'hydroxyde de nickel ne répond pas de manière satisfaisante à l'évolution de ce besoin énergétique. En effet, un alliage de type $AB_5$ possède une capacité électrochimique limitée à 300-320 mAh/g.

Les tentatives pour optimiser la capacité volumique d'un tel accumulateur montrent qu'il n'est pas possible d'augmenter la capacité sans réduire sa durée de vie.

Inversement, il n'est pas possible d'augmenter la durée de vie d'un tel accumulateur sans réduire sa capacité.

Pour augmenter la capacité volumique, des compositions de type $R_{1-x}Mg_xB_y$ avec y compris entre environ 3 et 4 ont été étudiées.

Par exemple, la demande de brevet US 2004/0134569 décrit un alliage de type $R_{1-x}Mg_xB_y$ avec $2,8 \leq y \leq 3,9$. Il est représenté par la formule :

$$Ln_{1-x}Mg_xNi_{y-a}Al_a$$

où

Ln est au moins un élément de terres rares,
$0,05 \leq x < 0,20$
$2,8 \leq y \leq 3,9$ et
$0,10 \leq a \leq 0,25$.

Cet alliage est utilisé comme matière active négative d'un accumulateur alcalin.

La demande de brevet US 2005/100789 décrit un alliage de type $R_{1-x}Mg_xB_y$ avec $3,0 \leq y \leq 3,96$. Il est représenté par la formule :

$$R_{1-x}Mg_xNi_yAl_zM_a$$

où

R est au moins un élément de terres rares,
$0,10 \leq x \leq 0,30$ ;
$2,8 \leq y \leq 3,6$ ;
$0 \leq a \leq 0,30$ et
$3,0 \leq y+z+a \leq 3,6$.

Cet alliage est utilisé comme matière active d'une électrode négative d'un accumulateur alcalin. Du manganèse, en une quantité inférieure à 1% en poids du poids de l'alliage, est présent dans l'électrode négative.

Le document JP 2002-069554 décrit un alliage de type $R_{1-x}Mg_xB_y$ avec $2,9 \leq y \leq 3,5$. Il est représenté par la formule :

$$R_{1-a}Mg_aNi_bCo_cM_d$$

où

R comprend au moins deux éléments de terres rares ;
M représente un ou plusieurs éléments choisis parmi Mn, Fe, V, Cr, Nb, Al, Ga, Zn, Sn, Cu, Si, P et B ; et
$0,15 < a < 0,35$ ;
$0 \leq c \leq 1,5$ ;

$0 \leq d \leq 0,2$ et
$2,9 < b+c+d < 3,5$.

Cet alliage est utilisé comme matière active négative d'un accumulateur alcalin.

Les alliages du type $R_{1-x}Mg_xB_y$ avec $3 < y < 4$ ont une capacité initiale d'environ 350 mAh/g, ce qui est supérieur à la capacité d'un alliage $AB_5$, qui est de l'ordre de 300 à 320 mAh/g. Cependant, la durée de vie de tels alliages est limitée par l'apparition de micro courts circuits au cours du vieillissement de l'accumulateur qui entraînent une détérioration des performances de l'accumulateur en terme d'autodécharge.

Le document EP-A-1 727 229 décrit un accumulateur à électrolyte alcalin dans lequel l'anode comprend:

a) un alliage hydrurable de formule $R_{1-y}Mg_yNi_{t-z}M_z$ dans laquelle
R représente La, éventuellement substitué par Nd et/ou Pr ;
M représente au moins un élément choisi parmi Mn, Fe, Al, Co, Cu, Zr et Sn ;
$0,1 \leq y \leq 0,4$ ; $3,2 \leq t \leq 3,5$ ; $z \leq 0,5$ ;
et dont la pression d'hydrogène en équilibre avec l'alliage, pour une insertion d'hydrogène dans l'alliage de 0,5H/Métal à 40°C, est inférieure à 0,7 bar ;
b) un composé à base d'yttrium en mélange avec l'alliage a). Il est dit que cet accumulateur présente une durée de vie en cyclage élevée.

Le document JP 2001-325957 décrit un accumulateur à électrolyte alcalin dans lequel l'anode comprend :

- un alliage de formule $Ln_{1-x}Mg_x(Ni_{1-y}T_y)_z$ dans laquelle
Ln est un élément choisi parmi les lanthanides ou dans le groupe constitué par Ca, Sr, Sc, Y, Ti, Zr et Hf; et
T est au moins un élément choisi parmi Li, V, Nb, Ta, Cr, Mo, Mn, Fe, Co, Al, Ga, Zn, Sn, In, Cu, Si, P et B, avec $0 < x < 1$ ; $0 \leq y \leq 0,5$ et $2,5 \leq z \leq 4,5$ ;
- un composé des terres rares comprenant de l'yttrium en une quantité allant de 0,01 à 20 % en poids par rapport à la masse d'alliage. Il est dit que cet accumulateur présente une durée de vie en cyclage élevée.

Le document JP 2005-108646 décrit un accumulateur à électrolyte alcalin dans lequel l'anode comprend :

- un alliage de formule $Ln_{1-p}Mg_p(Ni_{1-q}T_q)_r$ dans laquelle Ln représente un lanthanide et au moins un élément choisi parmi Ca, Sr, Sc, Y, Yb, Ti, Zr et Hf;
T est au moins un élément choisi parmi V, Nb, Ta, Cr, Mo, Mn, Fe, Co, Al, Ga, Zn, Sn, In, Cu, Si, P et B avec $0 < p \leq 1$, $0 \leq q \leq 0,5$ et $2,5 \leq r \leq 4,5$ ;
- un composé de manganate de lithium de formule $Li_xMn_{2-y}M_yO_4$, avec $0 \leq x < 1,2$ ; $0 < y < 2$ et M est un élément substituant. Il est dit que cet accumulateur permet d'éviter les courts-circuits internes.

Le document JP 2001-316744 décrit un accumulateur à électrolyte alcalin dans lequel l'anode comprend un alliage de formule $Ln_{1-x}Mg_x(Ni_{1-y}T_y)_z$ dans laquelle Ln est au moins un élément choisi parmi les lanthanides ou les éléments Ca, Sr, Sc, Y, Ti, Zr et Hf, et le pourcentage atomique de La représente de 10 à 50% de Ln ;
T est au moins un élément choisi parmi Li, V, Nb, Ta, Cr, Mo, Mn, Fe, Co, Al, Ga, Zn, Sn, In, Cu, Si, P et B, avec $0,05 \leq x < 0,20$, $0 \leq y \leq 0,5$ et $2,8 \leq z \leq 3,9$. Il est dit que cet alliage présente une bonne résistance à l'oxydation.

Le document JP 10-106550 décrit un accumulateur à électrolyte alcalin dans lequel l'anode comprend :

- un alliage capable de stocker de l'hydrogène, broyé sous forme de particules recouvertes d'un oxyde ou d'un hydroxyde de lanthanides ;
- des particules d'oxyde ou d'hydroxyde d'yttrium. Il est dit que cet accumulateur présente une durée de vie en cyclage améliorée à haute température.

L'article "Improvement in cycle life performance of high capacity nickel-metal hydride battery" publié dans Journal of Alloys and Compounds 231 (1995) 598-603 décrit que l'addition de 0.5-1.0 % en poids d'une poudre d'oxyde d'yttrium $Y_2O_3$ à un alliage de type $MmNi_5$ où M est choisi parmi Co, Mn et Al, permet d'augmenter la résistance de cet alliage à la corrosion lorsque celui-ci est utilisé dans l'électrode négative d'un accumulateur nickel métal-hydrure. La durée de vie de l'accumulateur en cyclage est environ doublée.

On recherche donc une composition pour électrode négative d'un accumulateur alcalin qui offre à cet accumulateur une plus longue de durée de vie et en même temps une plus faible autodécharge après une utilisation en cyclage.

**EP 1 900 834 B1**

RESUME DE L'INVENTION

A cet effet, l'invention propose une composition comprenant :

a) un alliage hydrurable de formule $R_{1-t}Mg_tNi_{s-z}M_z$ dans laquelle :

R représente un ou plusieurs éléments choisis dans le groupe comprenant La, Ce, Nd et Pr ;
M représente un ou plusieurs éléments choisis dans le groupe comprenant Mn, Fe, Al, Co, Cu, Zr et Sn ;
$0,1 \leq t \leq 0,4$ ;
$3,0 \leq s \leq 4,3$ ;
$z \leq 0,5$ ;

b) un composé du manganèse dans une proportion telle que la masse de manganèse représente de 1 à 5,5% de la masse d'alliage,
c) un composé de l'yttrium dans une proportion telle que la masse d'yttrium représente de 0,1% à 2% de la masse de l'alliage.

Selon un mode de réalisation, $0,1 \leq t \leq 0,25$ et $3,5 \leq s \leq 3,8$. Dans ce mode de réalisation $M=Mn_xAl_yM'_u$ où M' représente un ou plusieurs éléments choisis dans le groupe comprenant Fe, Co, Cu, Zr et Sn ;
$x \leq 0,20$ ;
$0,05 \leq y \leq 0,20$ ;
$u \leq 0,20$ et
$x+y+u \leq 0,5$.
Selon un mode de réalisation, l'alliage hydrurable est exempt de cobalt.
Selon un mode de réalisation, $0,1 \leq t \leq 0,25$, $3,5 \leq s \leq 3,8$ et l'alliage hydrurable est exempt de cobalt. Dans ce mode de réalisation, $M=Mn_xAl_yM'_u$ où :

M' représente un ou plusieurs éléments choisis dans le groupe comprenant Fe, Cu, Zr et Sn.
$x \leq 0,20$ ;
$y \leq 0,20$ ;
$u \leq 0,20$ et
$x+y+u \leq 0,5$.

Selon un mode de réalisation, la masse de manganèse représente entre 1,3% et 5% de la masse de l'alliage, de préférence encore, entre 2% et 3,5% de la masse de l'alliage.
Selon un mode de réalisation, la masse d'yttrium représente entre 0,2% et 1% de la masse de l'alliage, de préférence encore, entre 0,2% et 0,7% de la masse de l'alliage.
Selon un mode de réalisation, la pression d'hydrogène en équilibre avec l'alliage, pour 1% en masse d'hydrogène inséré, est inférieure à 1,5 bar.
Selon un mode de réalisation, le composé de l'yttrium est l'oxyde d'yttrium $Y_2O_3$.
Selon un mode de réalisation, le composé à base de manganèse est l'oxyde de manganèse MnO.
Selon un mode de réalisation, le composé de manganèse est un alliage hydrurable. Cet alliage hydrurable peut être de type $AB_5$ où :

A comprend un ou plusieurs éléments choisis dans le groupe des lanthanides;
B comprend un ou plusieurs éléments choisis dans le groupe comprenant Ni, Co, Mn et Al.

Selon un mode de réalisation, la taille des particules d'alliage hydrurable est caractérisée par un $Dv_{50\%}$ de 30 à 120 $\mu$m, de préférence de 50 à 100 $\mu$m.
L'invention concerne aussi une anode comprenant ladite composition.
L'invention concerne aussi un accumulateur à électrolyte alcalin comprenant ladite une anode.

EXPOSE DETAILLE DE MODES DE REALISATION DE L'INVENTION

L'invention propose une composition pour électrode négative d'accumulateur alcalin nickel métal hydrure, comprenant :

a) un alliage hydrurable répondant à la formule :

$$R_{1-t}Mg_tNi_{s-z}M_z,$$

où

R représente au moins un élément choisi dans le groupe comprenant La, Ce, Nd et Pr ;
M représente au moins un élément choisi dans le groupe comprenant Mn, Fe, Al, Co, Cu, Zr, Sn ;
avec $0,1 \leq t \leq 0,4$ ;
$3, 0 \leq s \leq 4,3$ ;
$z \leq 0,5$.

b) un composé du manganèse dans une proportion telle que la masse de manganèse représente de 1 à 5,5% de la masse d'alliage,
c) un composé de l'yttrium dans une proportion telle que la masse d'yttrium représente de 0,1% à 2% de la masse de l'alliage.

De préférence, la masse de manganèse représente entre 1,3% et 5% de la masse de l'alliage, de préférence encore, entre 2% et 3,5% de la masse de l'alliage.
De préférence, la masse d'yttrium représente entre 0,2% et 1% de la masse de l'alliage, de préférence encore, entre 0,2% et 0,7% de la masse de l'alliage.
Selon un mode de réalisation, l'invention concerne une composition pour électrode négative d'accumulateur alcalin nickel métal hydrure, comprenant :

a) un alliage hydrurable répondant à la formule :

$$R_{1-t}Mg_tNi_{s-z}M_z,$$

où

R représente au moins un élément choisi dans le groupe comprenant La, Ce, Nd et Pr ;
M représente au moins un élément choisi dans le groupe comprenant Mn, Fe, Al, Co, Cu, Zr, Sn ;
avec $0,1 \leq t \leq 0,25$ ;
$3,5 \leq s \leq 3,8$ ;
$z \leq 0,5$.

b) un composé du manganèse dans une proportion telle que la masse de manganèse représente de 1 à 5,5% de la masse d'alliage,
c) un composé de l'yttrium dans une proportion telle que la masse d'yttrium représente de 0,1% à 2 % de la masse de l'alliage.

De préférence, la masse de manganèse représente entre 1,3% et 5% de la masse de l'alliage, de préférence encore, entre 2% et 3,5% de la masse de l'alliage.
De préférence, la masse d'yttrium représente entre 0,2% et 1% de la masse de l'alliage, de préférence encore, entre 0,2% et 0,7% de la masse de l'alliage.
Selon un mode de réalisation, l'invention concerne une composition pour électrode négative d'accumulateur alcalin nickel métal hydrure, comprenant :

a) un alliage hydrurable répondant à la formule :

$$R_{1-t}Mg_tNi_{s-x-y-u}Mn_xAl_yM'_u,$$

où

R représente au moins un élément choisi dans le groupe comprenant La, Ce, Nd et Pr ;
M' représente au moins un élément choisi dans le groupe comprenant Fe, Co, Cu, Zr et Sn ; avec
$0,1 \leq t \leq 0,25$
$x \leq 0,20$ ;
$0,05 \leq y \leq 0,20$ ;

$u \leq 0,20$ ;
$x+y+u \leq 0,5$ et
$3,5 \leq s \leq 3,8$

b) un composé du manganèse dans une proportion telle que la masse de manganèse représente de 1 à 5,5 % de la masse d'alliage,
c) un composé de l'yttrium dans une proportion telle que la masse d'yttrium représente de 0,1% à 2 % de la masse de l'alliage.

De préférence, la masse de manganèse représente entre 1,3% et 5% de la masse de l'alliage, de préférence encore, entre 2% et 3,5% de la masse de l'alliage.

De préférence, la masse d'yttrium représente entre 0,2% et 1% de la masse de l'alliage, de préférence encore, entre 0,2% et 0,7% de la masse de l'alliage.

Selon un mode réalisation, l'invention propose une composition pour électrode négative d'accumulateur alcalin nickel métal hydrure, comprenant :

a) un alliage hydrurable exempt de cobalt et répondant à la formule :

$$R_{1-t}Mg_tNi_{s-z}M_z,$$

où

R représente au moins un élément choisi dans le groupe comprenant La, Ce, Nd et Pr ;
M représente au moins un élément choisi dans le groupe comprenant Mn, Fe, Al, Cu, Zr, Sn ;
avec $0,1 \leq t \leq 0,4$ ;
$3,0 \leq s \leq 4,3$ ;
$z \leq 0,5$.

b) un composé du manganèse dans une proportion telle que la masse de manganèse représente de 1 à 5,5% de la masse d'alliage,
c) un composé de l'yttrium dans une proportion telle que la masse d'yttrium représente de 0,1% à 2 % de la masse de l'alliage.

De préférence, la masse de manganèse représente entre 1,3% et 5% de la masse de l'alliage, de préférence encore, entre 2% et 3,5% de la masse de l'alliage.

De préférence, la masse d'yttrium représente entre 0,2% et 1% de la masse de l'alliage, de préférence encore, entre 0,2% et 0,7% de la masse de l'alliage.

Selon un mode de réalisation, l'invention concerne une composition pour électrode négative d'accumulateur alcalin nickel métal hydrure, comprenant :

a) un alliage hydrurable exempt de cobalt et répondant à la formule :

$$R_{1-t}Mg_tNi_{s-z}M_z,$$

où

R représente au moins un élément choisi dans le groupe comprenant La, Ce, Nd et Pr ;
M représente au moins un élément choisi dans le groupe comprenant Mn, Fe, Al, Cu, Zr, Sn ;
avec $0,1 \leq t \leq 0,25$ ;
$3,5 \leq s \leq 3,8$ ;
$z \leq 0,5$.

b) un composé du manganèse dans une proportion telle que la masse de manganèse représente de 1 à 5,5% de la masse d'alliage,
c) un composé de l'yttrium dans une proportion telle que la masse d'yttrium représente de 0,1% à 2 % de la masse de l'alliage.

De préférence, la masse de manganèse représente entre 1,3% et 5% de la masse de l'alliage, de préférence encore, entre 2% et 3,5% de la masse de l'alliage.

De préférence, la masse d'yttrium représente entre 0,2% et 1% de la masse de l'alliage, de préférence encore, entre 0,2% et 0,7% de la masse de l'alliage.

Selon un mode de réalisation, l'invention concerne une composition pour électrode négative d'accumulateur alcalin nickel métal hydrure, comprenant :

a) un alliage hydrurable exempt de cobalt et répondant à la formule :

$$R_{1-t}Mg_tNi_{s-x-y-u}Mn_xAl_yM'_u,$$

où

R représente au moins un élément choisi dans le groupe comprenant La, Ce, Nd et Pr ;
M' représente au moins un élément choisi dans le groupe comprenant Fe, Cu, Zr et Sn ;
avec $0,1 \leq t \leq 0,25$
$x \leq 0,20$
$y \leq 0,20$
$u \leq 0,20$
$x+y+u \leq 0,5$
$3,5 \leq s \leq 3,8$

b) un composé du manganèse dans une proportion telle que la masse de manganèse représente de 1 à 5,5% de la masse d'alliage,
c) un composé de l'yttrium dans une proportion telle que la masse d'yttrium représente de 0,1% à 2 % de la masse de l'alliage.

De préférence, la masse de manganèse représente entre 1,3% et 5% de la masse de l'alliage, de préférence encore, entre 2% et 3,5% de la masse de l'alliage.

De préférence, la masse d'yttrium représente entre 0,2% et 1% de la masse de l'alliage, de préférence encore, entre 0,2% et 0,7% de la masse de l'alliage.

La composition de l'alliage peut être confirmée par analyse élémentaire par la technique de plasma inductif ou par la technique d'absorption atomique ou la technique de fluorescence des rayons X.

Selon un mode de réalisation préféré, la pression d'hydrogène en équilibre avec l'alliage hydrurable $R_{1-t}Mg_t$-$Ni_{s-z}M_z$, à 40°C, pour 1% en masse d'hydrogène inséré, est inférieure à 1,5 bar. La pression d'hydrogène n'est pas inhérente à la composition de l'alliage hydrurable mais à la composition de la phase qui absorbe l'hydrogène. Or, pour une même composition d'alliage, des modes d'élaboration différents, notamment des traitements thermiques différents, peuvent conduire à l'obtention d'un alliage monophasé ou d'un alliage multiphasé dont la composition d'aucune des phases n'est identique à celle de l'alliage.

Selon un mode de réalisation préféré, l'alliage hydrurable $R_{1-t}Mg_tNi_{s-z}M_z$, est constitué majoritairement de phases cristallines de type $A_2B_7$ (hexagonale de type $Ce_2Ni_7$ ou rhomboédrique de type $Gd_2CO_7$), $A_5B_{19}$ (rhomboédrique de type $Ce_5CO_{19}$ ou hexagonale de type $Ce_5Ni_{19}$), ou d'un mélange de ces phases cristallines.

L'alliage de l'invention peut être élaboré :

a) par fusion et

- solidification lente (métallurgie classique)
- trempe (solidification rapide) comme le "strip casting" sur simple rouleau ou entre doubles rouleaux
- hypertrempe (refroidissement ultra rapide) utilisant les techniques de "melt spinning" ou de "planar flow casting" sur simple rouleau ou entre doubles rouleaux

b) par métallurgie des poudres (frittage) à partir

- des éléments purs
- de préalliages,

c) par mécanosynthèse.

L'alliage de l'invention peut avoir subi un recuit.

Selon un mode de réalisation, la taille des particules d'alliage hydrurable est caractérisée par un $Dv_{50\%}$ de 30 à 120 $\mu$m, de préférence de 50 à 100 $\mu$m.

Le mélange de l'alliage avec un composé de manganèse a pour effet d'empêcher ou de retarder l'apparition de micro courts circuits attribués à des dépôts de cobalt provenant de l'électrode positive ou de l'électrode négative, dans le séparateur au cours du cyclage de l'accumulateur. Ces micro courts circuits engendrent en effet une autodécharge exacerbée qui se traduit par une accélération de la réduction de la capacité restituée en décharge. Sans vouloir être lié par la théorie, la Demanderesse pense que la présence de manganèse conduit à la précipitation de composés mixtes de cobalt et de manganèse moins conducteurs que des dépôts de cobalt.

Il est donc préférable de réduire le taux de cobalt dans l'élément électrochimique et le taux de manganèse doit être supérieur à 1 % par rapport à la masse d'alliage pour que l'effet de la présence de manganèse soit significatif. En revanche, lorsque le taux de manganèse augmente dans l'électrode, la quantité de matière n'absorbant pas l'hydrogène ou absorbant une quantité d'hydrogène inférieure à celle de l'alliage $R_{1-t}Mg_tNi_{s-z}M_z$, augmente au détriment de la quantité de l'alliage $R_{1-t}Mg_tNi_{s-z}M_z$, ce qui conduit à une diminution de capacité de l'électrode.

La proportion massique de manganèse dans l'électrode négative doit donc être limitée à 5,5% de la masse d'alliage hydrurable.

Le composé à base de manganèse est choisi dans une liste non exhaustive comprenant des oxydes comme MnO, $MnO_2$, ou un hydroxyde ou un sel à base de manganèse. De préférence, le composé à base de manganèse est l'oxyde MnO. Le composé de manganèse peut être aussi un alliage hydrurable de type $AB_5$ comprenant du manganèse dans lequel :

A comprend un ou plusieurs éléments choisis dans le groupe des lanthanides;
B comprend un ou plusieurs éléments choisis dans le groupe comprenant Ni, Co, Mn et Al.

Le mélange de l'alliage hydrurable avec un composé à base d'yttrium a pour effet d'augmenter la durée de vie de l'anode.

Le composé à base d'yttrium est choisi dans une liste non exhaustive comprenant un oxyde d'yttrium tel que $Y_2O_3$, un hydroxyde d'yttrium tel que $Y(OH)_3$ ou un sel d'yttrium. De préférence, le composé à base d'yttrium est l'oxyde d'yttrium $Y_2O_3$.

Le composé à base d'yttrium est mélangé à l'alliage en une proportion telle que la masse d'yttrium représente de 0,1 % à 2 % de la masse de l'alliage, de préférence de 0,2 % à 1 % de la masse d'alliage, de préférence encore de 0,2 % à 0,7 % de la masse de l'alliage.

Le procédé d'ajout des composés à base de manganèse et d'yttrium à la matière active durant la fabrication de l'anode est simple à mettre en oeuvre industriellement. Il ne nécessite pas de dispositifs complexes. Ainsi qu'on peut le constater, la solution selon l'invention est effectivement très simple et/ou ne présente pas de surcoût notable.

L'invention concerne aussi une anode comprenant ladite composition. L'anode est fabriquée en empâtant un support avec une pâte constituée d'un mélange aqueux de la composition selon l'invention et éventuellement d'additifs. Le support peut être une mousse de nickel, un feuillard perforé plan ou tridimensionnel en nickel ou en acier nickelé.

Les additifs sont destinés à faciliter la mise en oeuvre de l'anode ou améliorer ses performances. Ils peuvent être des épaississants tels que la carboxyméthylcellulose (CMC), l'hydroxypropylméthylcellulose (HPMC), le polyacideacrylique (PAAc), la gomme xanthane, le poly(éthylèneoxyde) (PEO). Ils peuvent aussi être des liants tels que les copolymères de butadiène-styrène (SBR), le polystyrène acrylate (PSA), le copolymère éthylène-acétate de vinyle, le polytétrafluoroéthylène (PTFE). Ils peuvent être aussi des fibres polymères, tels que le polyamide, le polypropylène, le polyéthylène, etc. pour améliorer les propriétés mécaniques de l'électrode. Ils peuvent aussi être des agents conducteurs tels que de la poudre de nickel, de la poudre ou des fibres de carbone, des nanotubes.

Avantageusement, l'anode est recouverte d'une couche de surface destinée à améliorer la décharge à régime élevé et/ou la recombinaison de l'oxygène en fin de charge.

L'invention propose aussi une anode (électrode négative) pour accumulateur, fabriquée à partir de ladite composition.

L'invention propose également un accumulateur nickel métal hydrure comprenant ladite anode. Cet accumulateur comprend typiquement ladite au moins une anode, au moins une cathode au nickel, au moins un séparateur et un électrolyte alcalin.

La cathode est constituée de la masse active cathodique déposée sur un support qui peut être un support fritté, une mousse de nickel, un feuillard perforé plan ou tridimensionnel en nickel ou en acier nickelé.

La masse active cathodique comprend la matière active cathodique et éventuellement des additifs destinés à faciliter sa mise en oeuvre ou ses performances. La matière active cathodique est un hydroxyde de nickel $Ni(OH)_2$ qui peut être partiellement substitué par du cobalt, du magnésium, du cadmium et du zinc. Cet hydroxyde peut être partiellement oxydé et peut être revêtu d'une couche de surface à base de composés du cobalt.

Parmi les additifs, on peut citer, sans que cette liste soit exhaustive, la carboxyméthylcellulose (CMC), l'hydroxypropylméthylcellulose (HPMC), l'hydroxypropylcellulose (HPC), l'hydroxyéthylcellulose (HEC), la gomme xanthane, le polyacideacrylique (PAAc), le polystyrène maléique anhydride (SMA), les copolymères de butadiène-styrène (SBR) éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), le polystyrène acrylate (PSA), le polytétrafluoroéthylène (PTFE), un copolymère fluoré d'éthylène et de propylène (FEP), le polyhexafluoropropylène (PPHF), le copolymère éthylène-acétate de vinyle (EVA), l'oxyde de zinc ZnO, des fibres (Ni, C, polymères), des poudres de composés à base de cobalt tels que Co, $Co(OH)_2$, CoO, $Li_xCoO_2$, $H_xCoO_2$ et $Na_xCoO_2$.

Le séparateur est généralement composé de fibres en polyoléfine (par exemple en polypropylène) ou polyamide poreux non-tissé.

L'électrolyte est une solution aqueuse alcaline concentrée comprenant au moins un hydroxyde (KOH, NaOH, LiOH), en une concentration généralement de l'ordre de plusieurs fois la normalité.

De façon classique, on prépare les pâtes pour électrodes, on fabrique les électrodes, puis on superpose au moins une cathode, un séparateur et une anode afin de constituer le faisceau électrochimique. On introduit le faisceau électrochimique dans un godet conteneur et on l'imprègne avec un électrolyte alcalin aqueux. On ferme ensuite l'accumulateur.

L'invention concerne tout format d'accumulateurs : format prismatique (électrodes planes) ou format cylindrique (électrodes spiralées ou concentriques).

L'accumulateur selon l'invention peut être du type ouvert (ouvert ou semi-ouvert) ou du type étanche.

L'accumulateur selon l'invention est particulièrement bien adapté comme source d'énergie pour un véhicule électrique ou un appareil portable.

D'autres caractéristiques et avantages de la présente invention apparaîtront à la lecture des exemples.

EXEMPLES

Les alliages A, B et X dont les compositions sont rassemblées dans le Tableau 1, ont été élaborés par un procédé de refroidissement rapide, et recuits à des températures comprises entre 1000 et 1100 °C, pendant une durée comprise entre 1 h et 10 h.

L'alliage B ne contient pas de cobalt contrairement à l'alliage A.

L'alliage X est un alliage de type $AB_5$, utilisé comme source de manganèse.

Tableau 1 : Composition élémentaire des alliages

| Repère | La | Ce | Nd | Pr | Mg | Ni | Mn | Al | Co | t |
|--------|------|------|------|------|------|------|------|------|------|------|
| A | 0,19 | 0 | 0,21 | 0,45 | 0,15 | 3,29 | 0 | 0,05 | 0,15 | 3,49 |
| B | 0,19 | 0 | 0,21 | 0,45 | 0,15 | 4,02 | 0 | 0,05 | 0 | 3,53 |
| X | 0,78 | 0,15 | 0,05 | 0,01 | 0 | 4,25 | 0,60 | 0,19 | 0,24 | 5,29 |

Tableau 2 : Composition de la matière active de l'électrode négative des éléments étudiés et performances associées

| Elément | | a | b | c | d | e | f | g | h |
|---|---|---|---|---|---|---|---|---|---|
| Alliage $R_{1-t}Mg_tNi_{s-z}M_z$ | Repère | A | B | A | A | B | A | A | A |
| | % | 99,6 | 99,6 | 97,8 | 79,6 | 97,8 | 98,1 | 98,7 | 92,6 |
| MnO(%) | | 0 | 0 | 1,8 | 0 | 1,8 | 0,9 | 1,8 | 7 |
| $Y_2O_3$(%) | | 0,4 | 0,4 | 0,4 | 0,4 | 0,4 | 0,4 | 0,1 | 0,4 |
| Alliage X (%) | | 0 | 0 | 0 | 20 | 0 | 0 | 0 | 0 |
| Masse Mn/masse alliage (%) | | 0 | 0 | 1,39 | 1,51 | 1,39 | 0,70 | 1,39 | 5,86 |
| Capacité initiale $D°_{0h}$(mAh) | | 2997 | 3039 | 3033 | 3009 | 3017 | 3024 | 2950 | 2760 |
| Autodécharge initiale SD°(%) | | 14,1 | 14,2 | 13,5 | 13,7 | 13,6 | 13,7 | 13,5 | 13,4 |
| Capacité à 500 cycles $D^{500}_{0h}$ (mAh) | | 2998 | 2924 | 3054 | 3059 | 3024 | 3045 | 2280 | 2712 |

(suite)

| Elément | a | b | c | d | e | f | g | h |
|---|---|---|---|---|---|---|---|---|
| Autodécharge à 500 cycles SD$^{500}$ (%) | 28,4 | 18,4 | 13,4 | 13,7 | 13,8 | 26,2 | 13,7 | 13,6 |

Des éléments électrochimiques étanches de format Cs de capacité 3,0 Ah ont été réalisés avec les alliages précités. Le Tableau 2 résume les caractéristiques des électrodes négatives de ces éléments.

La matière active de l'électrode négative de l'élément 'a' contient l'alliage A et 0,4 % de $Y_2O_3$.

La matière active de l'électrode négative de l'élément 'b' contient l'alliage B et 0,4 % de $Y_2O_3$.

Les éléments 'a' et 'b' ne font pas partie de l'invention car les matières actives de l'électrode négative de ces éléments ne contiennent pas de manganèse.

La matière active de l'électrode négative de l'élément 'c' contient l'alliage A, 0,4% de $Y_2O_3$ et 1,8 % de MnO.

La matière active de l'électrode négative de l'élément 'd' contient 79,6% d'alliage A, 20% d'alliage X comme source de manganèse et 0,4% de $Y_2O_3$.

La matière active de l'électrode négative de l'élément 'e' contient l'alliage B, 0,4% de $Y_2O_3$ et 1,8 % de MnO.

Les éléments 'c', 'd' et 'e' font partie de l'invention.

La matière active de l'électrode négative de l'élément 'f' contient l'alliage A, 0,4% de $Y_2O_3$ et 0,9 % de MnO. L'élément 'f' ne fait pas partie de l'invention car la masse de manganèse présente dans l'électrode négative est trop faible.

La matière active de l'électrode négative de l'élément 'g' contient l'alliage A, 0,1% de $Y_2O_3$ et 1,8 % de MnO. L'élément 'g' ne fait pas partie de l'invention car la masse d'yttrium présente dans l'électrode négative est trop faible.

La matière active de l'électrode négative de l'élément 'h' contient l'alliage A, 0,4%de $Y_2O_3$ et 7 % de MnO (soit 5,86 % de Mn par rapport à la masse d'alliage). L'élément 'h' ne fait pas partie de l'invention car la masse de manganèse est trop élevée.

Les électrodes négatives ont été réalisées comme suit: une pâte constituée d'un mélange aqueux de poudre d'alliage, de CMC (épaississant), de SBR (liant), de carbone (conducteur) est empâtée dans une mousse de nickel. Toutes les électrodes négatives sont découpées aux mêmes dimensions. L'yttrium a été ajouté sous forme d'oxyde d'yttrium à raison de 0,4 % massique (soit 0,315 % d'yttrium par rapport à la masse d'alliage hydrurable). Le manganèse est ajouté sous forme d'oxyde MnO.

L'électrode positive est une électrode mousse standard contenant un hydroxyde à base de nickel et un composé conducteur Co(OH)$_2$.

Le faisceau constitué de l'électrode positive, du séparateur et de l'électrode négative, est spiralé et introduit dans le godet. Les éléments de connectique sont ensuite montés. Le godet est rempli d'électrolyte 9N ternaire KOH, NaOH, LiOH. Le godet, le séparateur, les éléments de connectique et l'électrolyte sont les mêmes que dans les éléments de format Cs de production.

Les éléments subissent tout d'abord 2 cycles comprenant chacun :

- une charge de 16h au courant de 0,3A,
- un repos d'une heure,
- une décharge au courant de 0,6A jusqu'à une tension d'arrêt de 0,9V.

Les éléments sont ensuite chargés au régime de C/2 pendant 2h 24 min.

Une mesure de capacité au régime de décharge de C/5 (0,6 A) jusqu'à une tension d'arrêt 0,9V est ensuite effectuée sur chaque élément.

Les éléments subissent ensuite une charge de 2h24 min au courant de C/2 et sont laissés au repos pendant 24 h à 40°C. La capacité déchargée à un régime de décharge de C/5, et une tension d'arrêt de 0,9V est mesurée. Cette mesure permet de calculer un pourcentage d'autodécharge de référence égal à SD° =(1-D$_{24h}$/D$_{0h}$)*100 où D$_{24h}$ représente la capacité déchargée après repos de 24h à 40°C et D$_{0h}$ la capacité déchargée sans cette période de repos. Les capacités mesurées lors de ces décharges et les pourcentages d'autodécharge de référence sont rassemblés dans le Tableau 2.

Les éléments subissent ensuite un cyclage prolongé à 20°C comprenant des phases de décharge des éléments allant jusqu'à 80% de leur capacité. (Profondeur de décharge de 80%). Chaque cycle du cyclage est constitué :

- d'une charge de 2h24min au régime de C/3,
- d'une décharge au régime de C limitée à 48 min ou par une tension inférieure à 0,9V et
- d'un repos de 15 min.

Périodiquement, au cours du cyclage, la capacité des éléments est mesurée dans des conditions de décharge à C/5 pour une tension d'arrêt de 0,9V, après une charge de 2h24min au régime de C/2, suivie ou non d'une période de repos de 24 h à 40°C. Le pourcentage d'autodécharge au $n^{ième}$ cycle est $SD^n = (1-D^n_{24h}/D^n_{0h})*100$ où $D^n_{24h}$ et $D^n_{0h}$ désignent respectivement la capacité déchargée après repos de 24h à 40°C et la capacité déchargée sans cette période de repos.

Ainsi, le pourcentage d'autodécharge $SD^n$ au cours du $n^{ième}$ cycle, peut est évalué de façon analogue au pourcentage d'autodécharge initial $SD°$, c'est-à-dire mesurée avant le commencement du cyclage.

RESULTATS

L'examen du Tableau 2 montre que les capacités électrochimiques initiales des éléments 'a' à 'g', c'est-à-dire avant le commencement du cyclage, sont comprises entre 2950 et 3050 mAh. L'élément 'h' présente une capacité électrochimique initiale de seulement 2760 mAh du fait de la présence trop importante de manganèse. La masse d'oxyde de manganèse ajoutée à l'élément h est en effet égale à 7% de la masse active (soit 7,56 % d'oxyde de manganèse par rapport à la masse d'alliage hydrurable ou 5,86 % de manganèse par rapport la masse d'alliage).

Après 500 cycles, les capacités des éléments 'a' à 'f' restent supérieures à 2900 mAh, soit une diminution de capacité inférieure à 5 %. En revanche, l'élément 'g', pour lequel le taux d'oxyde d'yttrium ajouté dans l'électrode négative est de 0,1 % (soit 0,08% d'yttrium par rapport à la masse d'alliage) présente une capacité après 500 cycles égale à 2280 mAh, ce qui ne représente que 77% de sa capacité initiale. La présence d'au moins 0,1% d'yttrium par rapport à la masse d'alliage est donc nécessaire pour obtenir une durée de vie élevée de l'élément.

La capacité de l'élément 'h' après 500 cycles est de 2712 mAh, ce qui représente plus de 98 % de sa capacité initiale.

La valeur de l'autodécharge en 24h à 40°C à l'état initial, c'est-à-dire avant le commencement du cyclage, est d'environ 14% pour tous les éléments. Après 500 cycles, elle s'élève à plus de 25% dans le cas de l'élément 'a' (sans Mn et dont l'alliage A contient un taux de 0,15 % de cobalt) ainsi que dans le cas de l'élément 'f' pour lequel la masse de manganèse ajouté représente moins de 1% de la masse d'alliage. Sans apport de manganèse, l'autodécharge après 500 cycles s'élève à 18% environ lorsque l'alliage hydrurable de l'électrode négative est exempt de Co comme le montre le résultat obtenu avec l'élément 'b'. En présence de manganèse dans l'électrode négative en une proportion supérieure à 1,0% de la masse d'alliage, que ce soit sous forme de MnO ou d'alliage X, l'autodécharge après 500 cycles reste pratiquement inchangée par rapport à l'autodécharge initiale (éléments 'c' à 'e', et 'g', 'h'). Elle reste voisine de 14%.

Ainsi, les éléments 'c', 'd' et 'e' suivant l'invention présentent des capacités initiales égales à $3000 \pm 50$ mAh et des capacités après 500 cycles supérieures à 2400 mAh. Ceci correspond à une perte de capacité inférieure à 20% de la capacité initiale sur la base d'une capacité initiale de 3000 mAh. Les éléments 'c', 'd' et 'e' suivant l'invention présentent également des niveaux d'autodécharge inférieurs à 15% après 500 cycles contrairement aux éléments 'a', 'b', et 'f' à 'h' dont la matière active de l'électrode négative est hors de l'invention. Les éléments 'c', 'd' et 'e' possèdent donc une durée de vie plus élevée et une autodécharge plus faible après cyclage.

**Revendications**

**1.** Composition comprenant :

a) un alliage hydrurable de formule $R_{1-t}Mg_tNi_{s-z}M_z$ dans laquelle :

R représente un ou plusieurs éléments choisis dans le groupe comprenant La, Ce, Nd et Pr ;
M représente un ou plusieurs éléments choisis dans le groupe comprenant Mn, Fe, Al, Co, Cu, Zr et Sn ;

$$0,1 \leq t \leq 0,4 \; ;$$

$$3,0 \leq s \leq 4,3 \; ;$$

$$z \leq 0,5 \; ;$$

b) un composé du manganèse dans une proportion telle que la masse de manganèse représente de 1 à 5,5% de la masse de l'alliage,
c) un composé de l'yttrium dans une proportion telle que la masse d'yttrium représente de 0,1% à 2% de la masse de l'alliage.

**2.** Composition selon la revendication 1, dans laquelle $0,1 \leq t \leq 0,25$ et $3,5 \leq s \leq 3,8$.

**3.** Composition selon la revendication 2, dans laquelle $M = Mn_x Al_y M'_u$ où :

M' représente un ou plusieurs éléments choisis dans le groupe comprenant Fe, Co, Cu, Zr et Sn.

$$x \leq 0,20 \; ;$$

$$0,05 \leq y \leq 0,20 \; ;$$

$$u \leq 0,20$$

et

$$x+y+u \leq 0,5.$$

**4.** Composition selon la revendication 1 ou 2, dans laquelle l'alliage hydrurable est exempt de cobalt.

**5.** Composition selon les revendications 2 et 4, dans laquelle $M = Mn_x Al_y M'_u$ où :

M' représente un ou plusieurs éléments choisis dans le groupe comprenant Fe, Cu, Zr et Sn.

$$x \leq 0,20 \; ;$$

$$y \leq 0,20 \; ;$$

$$u \leq 0,20$$

et

$$x+y+u \leq 0,5.$$

**6.** Composition selon l'une des revendications précédentes, dans laquelle la masse de manganèse représente entre 1,3% et 5% de la masse de l'alliage, de préférence encore, entre 2% et 3,5% de la masse de l'alliage.

**7.** Composition selon l'une des revendications précédentes, dans laquelle la masse d'yttrium représente entre 0,2% et 1% de la masse de l'alliage, de préférence encore, entre 0,2% et 0,7% de la masse de l'alliage.

**8.** Composition selon l'une des revendications précédentes, dans laquelle la pression d'hydrogène en équilibre avec l'alliage, pour 1% en masse d'hydrogène inséré, est inférieure à 1,5 bar.

**9.** Composition selon l'une des revendications précédentes, dans laquelle le composé de l'yttrium est l'oxyde d'yttrium $Y_2O_3$.

**10.** Composition selon l'une des revendications précédentes, dans laquelle le composé à base de manganèse est l'oxyde de manganèse MnO.

**11.** Composition selon l'une des revendications 1 à 9, dans laquelle le composé de manganèse est un alliage hydrurable.

**12.** Composition selon la revendication 11, dans laquelle l'alliage hydrurable est de type $AB_5$ où :

A comprend un ou plusieurs éléments choisis dans le groupe des lanthanides;
B comprend un ou plusieurs éléments choisis dans le groupe comprenant Ni, Co, Mn et Al.

**13.** Composition selon l'une des revendications précédentes, dans laquelle la taille des particules d'alliage hydrurable est **caractérisée par** un $Dv_{50\%}$ de 30 à 120 $\mu$m, de préférence de 50 à 100 $\mu$m.

**14.** Anode comprenant une composition selon l'une des revendications précédentes.

**15.** Accumulateur à électrolyte alcalin comprenant au moins une anode selon la revendication 14.

**Claims**

**1.** Composition comprising:

a) a hydrogen-fixing alloy of formula

$$R_{1-t}Mg_tNi_{s-z}M_z$$

in which:

- R represents one or more elements chosen from the group comprising La, Ce, Nd and Pr ;
- M represents one or more elements chosen from the group comprising Mn, Fe, Al, Co, Cu, Zr and Sn;
- $0.1 \leq t \leq 0.4$;
- $3.0 \leq s \leq 4.3$;
- $z \leq 0.5$;

b) a manganese compound in a proportion such that the mass of manganese represents from 1 to 5.5% of the mass of the alloy,
c) an yttrium compound in a proportion such that the mass of yttrium represents from 0.1 % to 2% of the mass of the alloy.

**2.** Composition according to claim 1, in which

$$0.1 \leq t \leq 0.25$$

and

$$3.5 \leq s \leq 3.8.$$

**3.** Composition according to claim 2, in which

$$M = Mn_xAl_yM'_u$$

where:

- M' represents one or more elements chosen from the group comprising Fe, Co, Cu, Zr and Sn.

- $x \leq 0.20$;
- $0.05 \leq y \leq 0.20$;
- $u \leq 0.20$ and
- $x+y+u \leq 0.5$.

**4.** Composition according to claim 1 or 2, in which the hydrogen-fixing alloy is cobalt-free.

**5.** Composition according to claims 2 and 4 in which

$$M=Mn_xAl_yM'_u$$

where:

- M' represents one or more elements chosen from the group comprising Fe, Cu, Zr and Sn.
- $x \leq 0.20$;
- $y \leq 0.20$;
- $u \leq 0.20$ and
- $x+y+u \leq 0.5$.

**6.** Composition according to one of the preceding claims, in which the mass of manganese represents between 1.3% and 5% of the mass of the alloy, preferably also, between 2% and 3.5% of the mass of the alloy.

**7.** Composition according to one of the preceding claims, in which the mass of yttrium represents between 0.2% and 1% of the mass of the alloy, preferably also, between 0.2% and 0.7% of the mass of the alloy.

**8.** Composition according to one of the preceding claims, in which the equilibrium hydrogen pressure with the alloy, for 1% by mass of hydrogen inserted, is less than 1.5 bar.

**9.** Composition according to one of the preceding claims, in which the yttrium compound is yttrium oxide $Y_2O_3$.

**10.** Composition according to one of the preceding claims, in which the manganese-based compound is manganese oxide MnO.

**11.** Composition according to one of claims 1 to 9, in which the manganese compound is a hydrogen-fixing alloy.

**12.** Composition according to claim 11, in which the hydrogen-fixing alloy is of $AB_5$ type where:

- A comprises one or more elements chosen from the group of lanthanides;
- B comprises one or more elements chosen from the group comprising Ni, Co, Mn and Al.

**13.** Composition according to one of the preceding claims, in which the size of the hydrogen-fixing alloy particles is **characterized by** a $Dv_{50\%}$ of 30 to 120 $\mu$m, preferably of 50 to 100 $\mu$m.

**14.** Anode comprising a composition according to any one of the preceding claims.

**15.** Alkaline electrolyte battery comprising at least one anode according to claim 14.

**Patentansprüche**

**1.** Zusammensetzung bestehend aus:

a) einer Wasserstofffixierenden Legierung der Formel

$$R_{1-t}Mg_tNi_{s-z}M_z$$

in welcher:

- R ein oder mehrere Elemente die von der Gruppe aus La, Ce, Nd und Pr bestehend ausgewählt sind, darstellt ;
- M ein oder mehrere Elemente die von der Gruppe aus Mn, Fe, Al, Co, Cu, Zr und Sn bestehend ausgewählt sind, darstellt;
- $0.1 \leq t \leq 0.4$;
- $3.0 \leq s \leq 4.3$;
- $z \leq 0.5$;

b) eine Manganenthaltende Verbindung mit einem solchen Manganverhältnis, dass diese 1 bis 5.5% der Masse der Legierung darstellt,
c) eine Yttriumenthaltende Verbindung mit einem solchen Yttriumverhältnis, dass diese 0.1 % bis 2% der Masse der Legierung darstellt.

2. Zusammensetzung nach Anspruch 1, in welcher

$$0.1 \leq t \leq 0.25$$

und

$$3.5 \leq s \leq 3.8.$$

3. Zusammensetzung nach Anspruch 2, in welcher

$$M = Mn_x Al_y M'_u$$

wo:

- M' ein oder mehrere Elemente die von der Gruppe bestehend aus Fe, Co, Cu, Zr und Sn ausgewählt sind, darstellt.
- $x \leq 0.20$;
- $0.05 \leq y \leq 0.20$;
- $u \leq 0.20$ und
- $x + y + u \leq 0.5$.

4. Zusammensetzung nach Anspruch 1 oder 2, in welcher die wasserstofffixierende Legierung Kobaltfreie ist.

5. Zusammensetzung nach Ansprüche 2 und 4 in welcher

$$M = Mn_x Al_y M'_u$$

wo:

- M' ein oder mehrere Elemente die von der Gruppe aus Fe, Cu, Zr und Sn bestehend ausgewählt sind, darstellt
- $x \leq 0.20$;
- $y \leq 0.20$;
- $u \leq 0.20$ und
- $x + y + u \leq 0.5$.

6. Zusammensetzung nach einem der vorgenannten Ansprüche, in welcher die Manganmasse zwischen 1,3% und 5% , vorzugsweise zwischen 2% und 3,5% der Legierungsmasse darstellt.

7. Zusammensetzung nach einem der vorgenannten Ansprüche, in welcher die Yttriummasse zwischen 0.2% und 1% der Legierungsmasse, vorzugsweise zwischen 0,2% und 0,7% der Legierungsmasse darstellt.

**8.** Zusammensetzung nach einem der vorgenannten Ansprüche, in welcher der Wasserstoffdruck im Gleichgewicht mit der Legierung, wenn 1% der Wasserstoffmasse eingefügt wird, kleiner als 1,5 bar ist.

**9.** Zusammensetzung nach einem der vorgenannten Ansprüche, in welcher die Yttriumverbindung Yttriumoxid der Formel $Y_2O_3$ ist.

**10.** Zusammensetzung nach einem der vorgenannten Ansprüche, in welcher die Manganverbindung Manganoxide der Formel MnO ist.

**11.** Zusammensetzung nach einem der Ansprüche 1 bis 9, in welcher die Manganverbindung eine Wasserstofffixierende Legierung ist.

**12.** Zusammensetzung nach Anspruch 11, in welcher die Wasserstofffixierende Legierung der $AB_5$-typ ist, wo :

- A ein oder mehrere Elemente die aus der Gruppe der Lanthaniden ausgewählt sind umfasst;
- B ein oder mehrere Elementen die aus der Gruppe bestehend aus Ni, Co, Mn und Al ausgewählt sind umfasst.

**13.** Zusammensetzung nach einem der vorgenannte Ansprüche, in welcher die Dimension der wasserstofffixierenden Legierung Partikeln **dadurch gekennzeichnet ist, dass** diese ein $Dv_{50\%}$ von 30 bis 120 $\mu$m, vorzugsweise von 50 bis 100 $\mu$m zeigt.

**14.** Anode bestehend aus einer Zusammensetzung nach einem der vorgenannten Ansprüche.

**15.** Akkumulator mit alkalischem Elektrolyten der am mindestens eine Anode nach Anspruch 14. enthält

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040134569 A
- US 2005100789 A
- JP 2002069554 A
- EP 1727229 A
- JP 2001325957 A
- JP 2005108646 A
- JP 2001316744 A
- JP 10106550 A

**Littérature non-brevet citée dans la description**

- Improvement in cycle life performance of high capacity nickel-metal hydride battery. *Journal of Alloys and Compounds,* 1995, vol. 231, 598-603